# EUROPEAN PATENT APPLICATION

(11) **EP 4 842 093 A1**
(43) Date of publication of application: **18.11.2026**
(21) Application number: 24921007.1
(22) Date of filing: 02.02.2024
(51) Int. Cl.: H04W 68/00

(54) **WIRELESS COMMUNICATION METHOD, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: LIU, Yang, Dongguan, Guangdong 523860 (CN); LI, Haitao, Dongguan, Guangdong 523860 (CN)
(74) Representative: Taor, Simon Edward William
(86) International application number: PCT/CN2024/075479
(87) International publication number: WO 2025/160946

(57) **Abstract**

The present application provides a wireless communication method, a device, and a storage medium. The method comprises: a terminal device receives a first paging message, the first paging message being used for determining first information, and the first information being used for the terminal device to receive downlink transmission of a core network device.

## Description

### TECHNICAL FIELD

Embodiments of the present disclosure relate to the technical field of mobile communication, and more particularly, to a wireless communication method and device, and a storage medium.

### BACKGROUND

New ambient Internet of Things (A-IOT) refers to a new type of wireless communication that is largely self-sufficient by using energy in the environment. It is an ecosystem for connecting and automating a large number of objects and devices, where each object is connected using a low-cost, self-powered sensor node to form a wireless sensor network. As one of the key mechanisms for powering, the A-IOT relies on energy harvesting, which eliminates the need to use cables to power or charge the battery in the A-IOT device. The propagation of radio signals around the A-IOT device can be used for power generation.

In the related art, the A-IOT device needs to receive a broadcast message, and perform random access based on the system information carried by the received broadcast messages in order to receive downlink data issued by the core network.

### SUMMARY

Embodiments of the present disclosure provide a wireless communication method and device, and a storage medium.

A wireless communication method according to an embodiment of the present disclosure includes the following operation.

A terminal device receives a first paging message, herein the first paging message is used to determine first information, and the first information is used for the terminal device to receive downlink transmission of a core network device.

A wireless communication method according to an embodiment of the present disclosure includes the following operation.

A base station sends a first paging message, herein the first paging message is used to determine first information, and the first information is used for the terminal device to receive downlink transmission of a core network device.

A terminal device according to an embodiment of the present disclosure includes a first communication unit.

The first communication unit is used to receive a first paging message, herein the first paging message is used to determine first information, and the first information is used for the terminal device to receive downlink transmission of a core network device.

A base station according to an embodiment of the present disclosure includes a second communication unit.

The second communication unit is used to send a first paging message, herein the first paging message is used to determine first information, and the first information is used for the terminal device to receive downlink transmission of a core network device.

A communication device according to an embodiment of the present disclosure may be the terminal device in the above solution or the base station in the above solution, and the communication device includes a processor and a memory. The memory is used to store a computer program, and the processor is used to call and run the computer program stored in the memory to execute the wireless communication method described above.

A chip according to an embodiment of the present disclosure is used to implement the wireless communication method described above.

Specifically, the chip includes a processor. The processor is used for calling and running a computer program in a memory, to cause a device on which the chip is mounted to execute the wireless communication method described above.

A computer readable storage medium according to an embodiment of the present disclosure is used to store a computer program, the computer program causes a computer to execute the wireless communication method described above.

A computer program product according to an embodiment of the present disclosure includes computer program instructions. The computer program instructions cause a computer to execute the wireless communication method described above.

A computer program according to an embodiment of the present disclosure, when running on a computer, causes the computer to execute the wireless communication method described above.

According to the above technical solution, in the first paging message sent to the terminal device, the base station carries the first information that is used for the terminal device to receive the downlink transmission, so that the terminal device in a non-connected state can receive the first information, thereby receiving the downlink transmission sent by the core network device based on the received first information. Before the terminal device receives the downlink transmission, there is no need for a random access procedure between the terminal device and the base station, thereby reducing the latency overhead of the air interface and lowering the power consumption of the A-IOT device.

### BRIEF DESCRIPTION OF THE DRAWINGS

The accompanying drawings illustrated herein are used to provide further understanding of the disclosure and constitute a part of the disclosure, and illustrative embodiments of the disclosure and their description are used to explain the disclosure instead of constituting improper limitation to the disclosure. In the drawings,
FIG. 1 is a schematic diagram of an application scenario according to an embodiment of the present disclosure;
FIG. 2 is a schematic diagram of an optional topology structure of A- IOT according to an embodiment of the present disclosure;
FIG. 3 is a schematic diagram of an optional topology structure of A- IOT according to an embodiment of the present disclosure;
FIG. 4 is a schematic diagram of an optional topology structure of A- IOT according to an embodiment of the present disclosure;
FIG. 5 is an optional flowchart of a wireless communication method according to an embodiment of the present disclosure;
FIG. 6 is an optional flowchart of a wireless communication method according to an embodiment of the present disclosure;
FIG. 7 is an optional flowchart of a wireless communication method according to an embodiment of the present disclosure;
FIG. 8 is an optional flowchart of a wireless communication method according to an embodiment of the present disclosure;
FIG. 9 is an optional flowchart of a wireless communication method according to an embodiment of the present disclosure;
FIG. 10 is an optional flowchart of a wireless communication method according to an embodiment of the present disclosure;
FIG. 11 is an optional flowchart of a wireless communication method according to an embodiment of the present disclosure;
FIG. 12 is an optional flowchart of a wireless communication method according to an embodiment of the present disclosure;
FIG. 13 is an optional flowchart of a wireless communication method according to an embodiment of the present disclosure;
FIG. 14 is an optional logical framework diagram of a wireless communication method according to an embodiment of the present disclosure;
FIG. 15 is an optional flowchart of a wireless communication method according to an embodiment of the present disclosure;
FIG. 16 is an optional flowchart of a wireless communication method according to an embodiment of the present disclosure;
FIG. 17 is an optional flowchart of a wireless communication method according to an embodiment of the present disclosure;
FIG. 18 is a schematic diagram of an optional structure of a terminal device according to an embodiment of the present disclosure;
FIG. 19 is a schematic diagram of an optional structure of a base station according to an embodiment of the present disclosure;
FIG. 20 is a schematic diagram of a structure of a communication device according to an embodiment of the present disclosure;
FIG. 21 is a schematic diagram of a structure of a chip according to an embodiment of the present disclosure;
FIG. 22 is a schematic block diagram of a communication system according to an embodiment of the present disclosure.

### DETAILED DESCRIPTION

Hereinafter, the technical solutions in the embodiments of the present disclosure will be described with reference to the accompanying drawings in the embodiments of the present disclosure, and it is apparent that the described embodiments are part of the embodiments of the present disclosure, but not all the embodiments. Based on the embodiments in the present disclosure, all other embodiments obtained by those skilled in the art without creative work fall within the scope of protection of the present disclosure.

Communication system scenarios include the Terrestrial Network (TN) and Non-Terrestrial Network (NTN). The NTN generally uses the satellite communication to provide communication services to ground users. NTN systems currently include the NR-NTN system and IoT-NTN system, and other NTN systems may be included in the future.

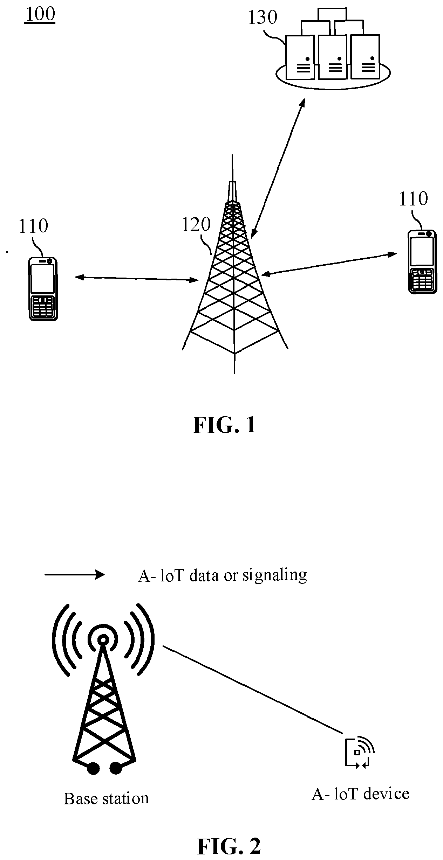

FIG. 1 is a schematic architectural diagram of a communication system according to an embodiment of the present disclosure. As illustrated in FIG. 1, the communication system 100 may include a terminal device 110 and a network device 120. The network device 120 may communicate with the terminal device 110 through an air interface. Multi-service transmission is supported between the terminal device 110 and the network device 120.

It should be understood that the embodiments of the present disclosure are only illustrative of the communication system 100, but the embodiments of the present disclosure are not limited thereto. That is, the technical solutions of the embodiments of the present disclosure can be applied to various communication systems, such as a Long Term Evolution (LTE), an LTE Time Division Duplex (TDD), a Universal Mobile Telecommunication System (UMTS), an Internet of Things (IoT) system, a Narrow Band Internet of Things (NB-IoT) System, enhanced Machine-Type Communications (eMTC) system, 5G communication system (also referred to as a New Radio (NR) communication system), or a future communication system, etc.

In the communication system 100 illustrated in FIG. 1, the network device 120 may be an access network device (i.e., a base station) that communicates with the terminal device 110. The access network device may provide communication coverage for a specific geographic area and may communicate with the terminal device 110 (e.g., UE) located within the coverage area.

The network device may be an Evolutionary Node B (eNB or eNodeB) in an LTE system, a Next Generation Radio Access Network (NG RAN) device, a base station (gNB) in an NR system, or a radio controller in a Cloud Radio Access Network (CRAN), or the network device 120 may be a relay station, an access point, an in-vehicle device, a wearable device, a hub, a switch, a bridge, a router, or a network device in a future evolved Public Land Mobile Network (PLMN).

The terminal device 110 may be any terminal device including, but not limited to, a terminal device that employs a wired or wireless connection with the network device 120 or other terminal devices.

For example, the terminal device may refer to an access terminal, User Equipment (UE), a subscriber unit, a subscriber station, a mobile station, a mobile platform, a remote station, a remote terminal, a mobile device, a user terminal, a terminal, a wireless communication device, a user agent or a user apparatus, and the like. The access terminal may be a cellular telephone, a cordless telephone, a Session Initiation Protocol (SIP) telephone, an IoT device, a satellite handheld terminal, a Wireless Local Loop (WLL) station, a Personal Digital Assistant (PDA), a handheld device having wireless communication capabilities, a computing device, or other processing device connected to a wireless modem, an in-vehicle device, a wearable device, a terminal device in a 5G network, or a terminal device in a future evolved network, or the like.

The terminal device 110 may be used for a Device to Device (D2D) communication.

The wireless communication system 100 may further include a core network device 130 that communicates with a base station. The core network device 130 may be a 5G core network (5GC) device, for example, an Access and Mobility Management Function (AMF), an Authentication Server Function (AUSF), a User Plane Function (UPF), or a Session Management Function (SMF). Optionally, the core network device 130 may be an Evolved Packet Core (EPC) device of the LTE network, for example, a Session Management Function + Core Packet Gateway (SMF + PGW-C) device. It should be understood that the SMF + PGW-C device may simultaneously implement the functions that the SMF and the PGW-C can implement. In the process of network evolution, the above-mentioned core network device may be called by other names, or a new network entity may be formed by dividing the functions of the core network, which is not limited in the embodiments of the present disclosure.

The various functional units in the communication system 100 may also establish connections through a next generation (NG) interface to enable communication.

For example, the terminal device establishes an air interface connection with the access network device through the Uu interface, to transmit the user plane data and control plane signaling. The terminal device may establish a control plane signaling connection with the AMF through the NG interface 1 (N1 for short). The access network device (for example, a next generation radio access base station (gNB)) may establish a user plane data connection with the UPF through the NG interface 3 (N3 for short). The access network device may establish a control plane signaling connection with the AMF through the NG interface 2 (N2 for short). The UPF may establish a control plane signaling connection with the SMF through the NG interface 4 (N4 for short). The UPF may interact user plane data with the data network through the NG interface 6 (N6 for short). The AMF may establish a control plane signaling connection with the SMF through the NG interface 11 (N11 for short). The SMF may establish a control plane signaling connection with the PCF through the NG interface 7 (N7 for short).

FIG. 1 exemplarily illustrates one base station, one core network device, and two terminal devices. Optionally, the wireless communication system 100 may include multiple base station devices, and another number of terminal devices may be included in the coverage area of each base station, which is not limited in the embodiment of the present disclosure.

It should be noted that FIG. 1 merely illustrates a system to which the present disclosure is applicable in the form of example, and of course, the method illustrated in the embodiment of the present disclosure may be applicable to other systems. Furthermore, the terms "system" and "network" are often used interchangeably herein. The term "and/or" herein is only an association relationship describing associated objects, and indicates that there may be three kinds of relationships. For example, A and/or B may indicate that A exists alone, A and B exist simultaneously, and B exists alone. In addition, the character "/" herein generally indicates that the associated objects are in an "or" relationship. It should be understood that the "indicate" mentioned in the embodiments of the present disclosure may be a direct indication, an indirect indication, or may represent an associated relationship. For example, A indicates B, which may mean that A directly indicates B, for example, B can be acquired through A. It may also mean that A indirectly indicates B, for example, A indicates C, and B can be acquired through C. It may also mean that there is an associated relationship between A and B. It should be understood that, in the embodiments of the present disclosure, the term "correspond" may represent that there is a direct correspondence or indirect correspondence relationship between the two, may represent that there is an association between the two, or may represent a relationship of indicating and being indicated, configuring and being configured, or the like. It should also be understood that the "predefined" or "predefined rule" mentioned in the embodiments of the present disclosure may be implemented by pre-storing corresponding codes, tables in the device (for example, including the terminal device and the base station), or in another manner that can be used to indicate relevant information, and the present disclosure does not limit the specific implementation manner thereof. For example, "predefined" may refer to defined in the protocol. It should also be understood that, in the embodiments of the present disclosure, the"protocol" may refer to a standard protocol in the field of communication, and may include, for example, a LTE protocol, an NR protocol, and related protocols applied to a future communication system, which are not limited in the present disclosure.

In order to facilitate understanding the technical solutions of the embodiments of the present disclosure, the related technologies of the embodiments of the present disclosure will be described below. The related technologies below can be arbitrarily combined with the technical solutions of the embodiments of the present disclosure as options, and all of them belong to the protection scope of the embodiments of the present disclosure.

The A-IoT refers to a new type of wireless communication that is largely self-sufficient by using energy in the environment. It is an ecosystem for connecting and automating a large number of objects and devices, where each object is connected to form a wireless sensor network using low-cost, self-powered sensor nodes.

As one of the key mechanisms for powering, the A-IOT relies on energy harvesting, which eliminates the need to use cables to power or charge the batteries in the mobile device and the smart object. Vibration from device, machinery and buildings, and propagation of peripheral radio signals can all be used for power generation.

In the related art, the topology structure of A-IOT under the 5G network includes the following.

Topology 1: as illustrated in FIG. 2, the A-IOT device communicates directly and bidirectionally with the base station. Communication between the base station and the A-lOT device includes A-IoT data and/or A-IoT signaling. There is a possibility in this topology that the sending from the base station to the A-IOT device is different from the reception by the base station from the A-IOT device.

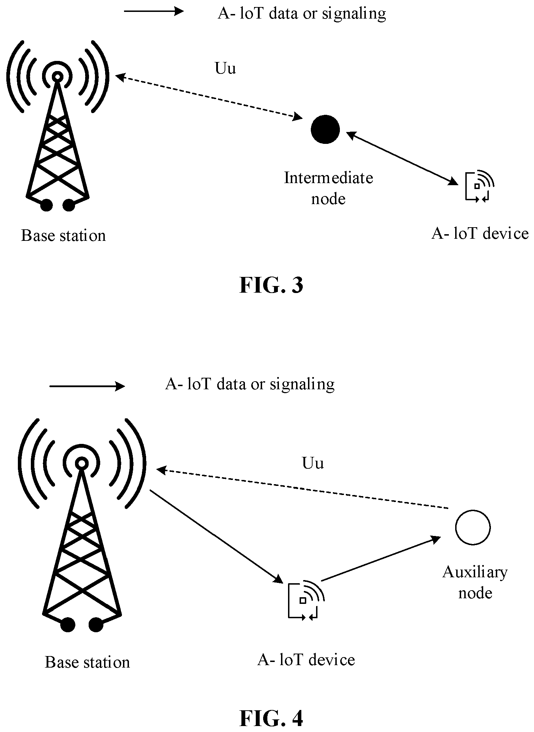

Topology 2: as illustrated in FIG. 3, the A-IOT device communicates indirectly with the base station through an intermediate node. In this topology, the intermediate node may be a relay node, a Integrated Access and Backhaul (IAB) node, a repeat end, or the like as an A-IOT device. The intermediate node processes the A-IOT data and/or signaling transmitted between the A-IOT device and the base station.

Topology 3: as illustrated in FIG. 4, an A-IOT device transmits data or signaling to the base station, and receives data or signaling from the auxiliary node; or the A-IOT device transmits data or signaling to the auxiliary node, and receives data or signaling from the base station. In this topology, the auxiliary node may be a relay node, an IAB node, a repeat end, or the like as an A-IOT device.

A-IOT involves the following two scenarios:
an indoor scenario based on topology 1, herein the base station is located indoors;
a scenario based on topology 2 and where the intermediate node is UE, herein the base station is located outdoors and the A-IOT device is located indoors.

The types of A-IOT device include the following.

Type 1: 1µW peak power consumption, with energy storage, an initial sampling frequency offset (SFO) up to 10X ppm, neither DL nor UL amplification in the device. The UL transmission of the device is backscattered on an externally provided carrier.

Type 2: greater than a few hundred µW peak power consumption, with energy storage, an initial SFO up to 10X ppm, with DL and/or UL amplification in the device. The UL transmission of the device may be generated internally by the device or backscattered on an externally provided carrier.

### Paging in R16

In the related art, the UE is always paged by the network through a 5th Generation System-Temporary Mobile Subscription Identifier (5G-S-TMSI). This ID is assigned by the AMF to the UE during the initial access procedure.

The paging frame and paging occasion related information are broadcast in the SIB1, indicated in the downlink configuration common SIB (downlinkConfigCommonSIB) of the serving cell configuration common SIB (ServingCellConfigCommonSIB) in the SIB1. The downlinkConfigCommonSIB includes the following information: a physical control channel configuration (PCCH-Config), a paging cycle (PagingCycle), and a paging frame offset (nAndPagingFrameOffset).

The information element ServingCellConfigCommonSIB is used to configure the cell-specific parameters of the UE serving cell in SIB1, and the information element downlinkConfigCommonSIB includes a SIB with a common downlink parameter configuration.

The information related to the paging PDCCH monitoring occasion (per PO) is broadcast in the first PDCCH monitoring occasion of the field PO (firstPDCCH-MonitoringOccasionOfPO) in the information element PDCCH common configuration (PDCCH-ConfigCommon) of SIB1.

Upon receiving a DCI addressed to a Paging Radio Network Temporary Identifier (P-RNTI), the UE will attempt to discover whether any paging record (the maximum number is 32) in the paging message matches its own ID.

### Traditional paging in R17

A paging early indication (PEI) prior to each discontinuous reception (DRX) cycle is notified by the UE's network before its paging occasion (PO), to determine whether the paging message must be monitored to save power. If there is no PEI, the UE may sleep until it needs to perform in-frequency measurements.

The PEI is indicated by a DCI or a reference signal, such as a secondary synchronization signal.

The ID of the subgroup of UEs required to monitor the paging message can also be carried in the PEI.

The information of the subgroup ID is allocated by the AMF using Non-Access Stratum (NAS) signaling or by the gNB through the SIB.

PEI configuration related information is transmitted through a Scheduling Block (SB) 1, which includes a PEI search space, DCI2_7 information, an SS index, subgroup information on which the UE is based, and the like.

The UE notifies the network of the PEI and the subgroup support capability in the registration request, and the 5G core network notifies the network of the supported core network subgroups in the registration acceptance.

In the related art, when the core network sends the signaling data to the terminal device, the downlink signaling or downlink data can be carried in the message 3 or message B in the random access procedure, but this process requires the terminal device to receive the broadcast message first and then execute the random access procedure. Complex signaling interaction is required before the terminal device receives the data of the core network device, which makes the air interface delay overhead relatively large, and also seriously affects the power consumption of the A-IOT device in the A-IOT scenario in which many A-IOT devices are deployed.

In order to facilitate understanding the technical solutions of the embodiments of the present disclosure, the technical solutions of the present disclosure will be described in detail below with reference to specific embodiments. As an optional solution, the above related technologies can be arbitrarily combined with the technical solutions of the embodiments of the present disclosure, and all of them belong to the protection scope of the embodiments of the present disclosure. Embodiments of the present disclosure include at least some of the following.

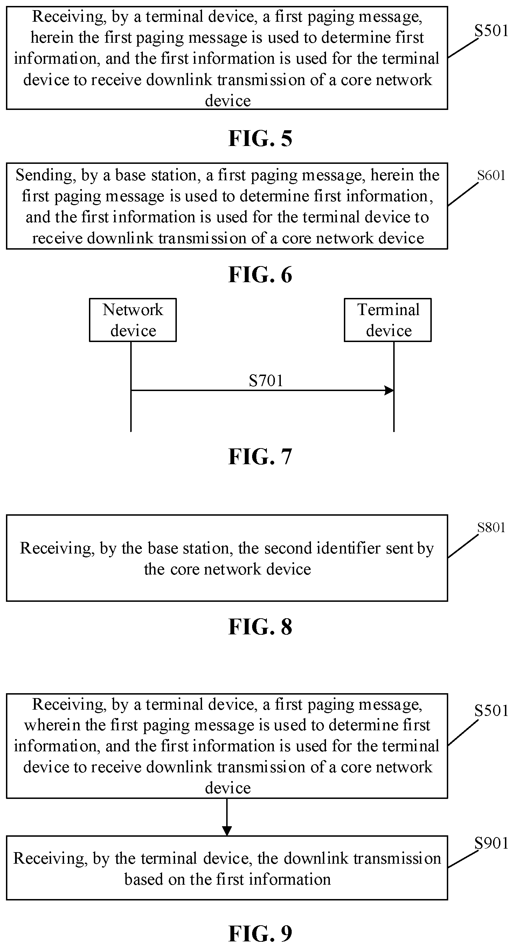

An embodiment of the present disclosure provides a wireless communication method, as illustrated in FIG. 5. The method includes the following operation.

At S501, a terminal device receives a first paging message, herein the first paging message is used to determine first information, and the first information is used for the terminal device to receive downlink transmission of a core network device.

An embodiment of the present disclosure provides a wireless communication method, as illustrated in FIG. 6. The method includes the following operation.

At S601, a base station sends a first paging message, herein the first paging message is used to determine first information, and the first information is used for the terminal device to receive downlink transmission of a core network device.

An embodiment of the present disclosure provides a wireless communication method, as illustrated in FIG. 7. The method includes the following operation.

At S701, a base station sends a first paging message to a terminal device, herein the first paging message is used to determine first information, and the first information is used for the terminal device to receive downlink transmission of a core network device.

Next, a wireless communication method illustrated in FIG. 5, FIG. 6 or FIG. 7 will be described.

When the base station includes downlink transmission that needs to be sent to the terminal device, the base station sends a first paging message to the terminal device, and initiates paging to the terminal device through the first paging message. The first paging message includes first information, and the first information is used for the terminal device to receive downlink transmission of a core network device. The downlink transmission may include Downlink Control Information (DCI) and/or Downlink data (DL data).

When the terminal device in the non-connected state has monitored the first paging message, the terminal device receives the first paging message sent by the network device, analyzes the first paging message, and determines the first information, so as to receive downlink transmission of the core network based on the first information.

It can be understood that the terminal device may be an A-IOT device, and the A-IOT device may also be referred to as a tag device or an A-IOT tag.

In the embodiment of the present disclosure, the base station may send the first paging message to the terminal device after determining that the terminal device is in its coverage area and when the base station includes downlink transmission that needs to be sent to the terminal device.

In the embodiment of the present disclosure, the terminal device may be located on a mobile device being transported (such as an automobile, a package, a packaging box, etc.), and after the mobile device enters the space area where the base station is located, the server of the space area determines, based on the entry of the mobile device, that the terminal device enters the coverage area of the base station. Here, there may be a binding relationship between the terminal device and the mobile device.

It will be appreciated that the first paging message may be a paging message for a terminal device, or may be a paging message for a first terminal device group including multiple terminal devices. When the first paging message is a paging message for the first terminal device group, multiple terminal devices in the first terminal device group receive the first paging message, and each terminal device receives downlink transmission of the core network based on the first information carried by the received first paging message. At this time, different terminal devices in the first terminal device group can receive the same downlink transmission based on the first information.

Through the wireless communication method provided by the embodiment of the present disclosure, in the first paging message sent to the terminal device, the base station carries the first information that is used for the terminal device to receive the downlink transmission, so that the terminal device in a non-connected state can receive the first information, and receives the downlink transmission sent by the core network device based on the first information in the non-connected state. Before the terminal device receives the downlink transmission, the terminal device does not need to switch from the non-connected state to the connected state, and thus there is no need for a random access procedure between the terminal device and the base station, thereby reducing the latency overhead of the air interface and lowering the power consumption of the A-IOT device.

In some embodiments, the first information includes one or more of the following:
a first identifier for decoding the downlink transmission; or
first configuration information for determining a time-frequency resource range of the downlink transmission.

The first identifier is an identifier for scrambling a downlink channel carrying downlink transmission. The base station scrambles the downlink channel carrying the downlink transmission based on the first identifier, and the terminal device descrambles the downlink channel carrying the downlink transmission based on the first identifier, thereby decoding the downlink transmission.

In some embodiments, the first identifier includes:
a group radio network temporary identifier (G-RNTI) or a cell radio network temporary identifier (C-RNTI).

It can be understood that if the first identifier is a G-RNTI, the G-RNTI is an RNTI for the first terminal device group which is assigned to the first terminal device group in which the terminal device is located, and the terminal devices in the first terminal device group may perform decoding of downlink transmission based on the G-RNTI, respectively.

It can be understood that if the first identifier is a C-RNTI, the C-RNTI is an RNTI for the terminal device which is allocated to the terminal device, and the terminal device may perform decoding of downlink transmission based on the C-RNTI.

For the first configuration information, the base station sends downlink transmission within the time-frequency resource range determined based on the first configuration information, and the terminal device searches for downlink transmission within the time-frequency resource range determined based on the first configuration information, thereby realizing the downlink transmission from the base station to the terminal device.

In some embodiments, if the first information does not include the first configuration information, the time-frequency resource range of the downlink transmission is based on first configuration information contained in system information block SIB1.

In the embodiment of the present disclosure, in case that the first information includes the first configuration information, the terminal device determines the time-frequency resource range of downlink transmission based on the first configuration information included in the first information. In case that the first information does not include the first configuration information, the terminal device determines the time-frequency resource range of downlink transmission based on the first configuration information included in the SIB1.

In some embodiments, the first configuration information includes:
group-specific second information or terminal device-specific second information, the second information including: control resource set configuration information and/or search space configuration information.

The group-specific second information may be understood as second information for the first terminal device group or second information specific to the first terminal device group. The group-specific second information may be described as a group-specific Control Resource Set (CORSET) configuration and a group-specific search space configuration.

The terminal device-specific second information may be understood as second information for the terminal device or second information specific to the terminal device. The terminal device-specific second information may be described as a UE-specific CORSET configuration and a UE-specific search space configuration.

The first configuration information in SIB1 may be understood as the default second information in SIB1, such as Type-0 CORSET configuration and Type 0 PDCCH search space.

In some embodiments, the first paging message includes a second identifier, and the second identifier is an identifier of the terminal device or an encrypted identifier of the terminal device.

The base station carries a second identifier in the sent first paging message, and the second identifier is used to indicate that the first paging message is a paging message sent to the terminal device or the first terminal device group. The terminal device initiates paging to the terminal device by using the second identifier as the paging identifier. The second identifier is an identifier of the terminal device (UE ID) or an encrypted identifier of the terminal device (encrypted UE ID).

The terminal device uses the second identifier as the paging terminal device identifier in the paging record. In case that the terminal device has monitored the first paging message, the terminal device matches the paging identifier carried in the first paging message and the paging terminal device identifier in the paging record of the terminal device, and when both are second identifiers, it is determined that the paging identifier carried in the first paging message and the paging terminal device identifier in the paging record of the terminal device are the same, and then it is determined that the first paging message sent by the base station is a paging message sent to the current terminal device.

It will be appreciated that the second identifier may be a terminal device-specific identifier (personal ID) or a first terminal device group-specific identifier (group ID).

When the second identifier is the personal ID, only the terminal device recognizes that the first paging message is a paging message sent to itself. When the second identifier is the group ID, multiple terminal devices among the first terminal devices recognize that the first paging message is a paging message sent to themselves.

In the embodiment of the present disclosure, the base station initiates paging to the terminal device by using the identifier of the terminal device, and the network side does not need to additionally allocate the paging identifier to the terminal device.

In some embodiments, if the second identifier is the encrypted identifier of the terminal device, the second identifier is obtained by performing calculation on the identifier of the terminal device through a security algorithm.

The encrypted identifier is obtained by performing calculation on the UE ID through a security algorithm.

In some embodiments, the encrypted identifier is obtained by performing calculation on information such as a UE ID, a cell ID, time, etc. through a security algorithm.

In some embodiments, the second identifier is prestored in the terminal device and the core network device.

In the embodiment of the present disclosure, the UE ID may be stored by the servers of the terminal device and the core network device, respectively. For the terminal device, the UE ID may be set in the terminal device at the factory setting.

If the second identifier is an encrypted UE ID, the terminal device derives the UE ID based on the security algorithm to obtain the encrypted UE ID, and the core network device derives the UE ID based on the same security algorithm to obtain the encrypted UE ID.

The security algorithm used to obtain the encrypted UE ID may be pre-set or protocol defined.

It can be understood that the second identifier is stored in advance in the terminal device and the core network device. Without going through the registration process, the terminal device can receive, based on the second identifier, the first paging message sent by the base station whose paging identifier is the second identifier.

In the embodiment of the present disclosure, the UE ID, i.e., the paging UE ID, may be an ID that is set at the factory of the terminal device, or may be derived according to the ID set at the factory, for example, through a security algorithm. The paging UE ID is stored by the terminal device and the network server respectively. The terminal device enters the physical space where the coverage area of the base station is located, and the core network device can learn in advance the UE ID of the terminal device that enters the coverage area of the base station.

In the embodiment of the present disclosure, as illustrated in FIG. 8, in case that the second identifier is prestored in the terminal device and the core network device, the method further includes the following operation.

At S801, the base station receives the second identifier sent by the core network device.

In case that having stored the second identifier, the core network device sends the second identifier to the base station, so that the base station can obtain the second identifier, to send the first stored message based on the second identifier, so as to page the terminal device.

If the second identifier sent by the core network device to the base station is the unencrypted ID of the terminal device, the base station may calculate the UE ID through a security algorithm to obtain the encrypted identifier.

In some embodiments, a condition that the first paging message includes the first information is one of the following:
condition 1, the downlink transmission does not need to be protected;
condition 2, a security level of the downlink transmission is lower than a set security level.

The information transmitted in the first paging message is sent in plain text, but may involve the encrypted data (neither the paging channel nor the paging message are encrypted). Therefore, the security of the first information transmitted in the first paging message cannot be guaranteed. In the embodiment of the present disclosure, when it is determined that the downlink transmission does not need protection (i.e., security protection) or the security level of the downlink transmission is lower than the set security level, the base station carries the first information in the first paging message; when it is determined that the security level of the downlink transmission is higher than or equal to the set security level, the base station does not carry the first information in the first paging message.

It can be understood that in case that the first paging message does not carry the first information, the second identifier may be carried so that the terminal device recognizes that the first paging message is a paging message sent to itself.

In some embodiments, the base station receives indication information sent by the core network device, herein the indication information is used to indicate a security level of the downlink transmission.

Before sending the first paging message, the terminal device interacts with the core network device, to acquire the indication information indicating the security level of the downlink data.

It can be understood that the core network device may actively send the indication information indicating the security level of the current downlink transmission to the base station, or the base station may request the security level to the core network device, so that the core network passively sends the indication information to the base station.

In some embodiments, the core network device may be an AMF.

In the embodiment of the present disclosure, in case that the base station determines that the downlink transmission of the core network does not need protection or the security level requirement is low, the base station carries the first information in the first paging message, so that the first information corresponding to the downlink transmission with the high security level requirement is avoided from being leaked when transmitted in the first paging message, and the data security is improved.

In some embodiments, based on FIG. 5, as illustrated in FIG. 9, the method further includes the following operation.

At S901, the terminal device receives the downlink transmission based on the first information.

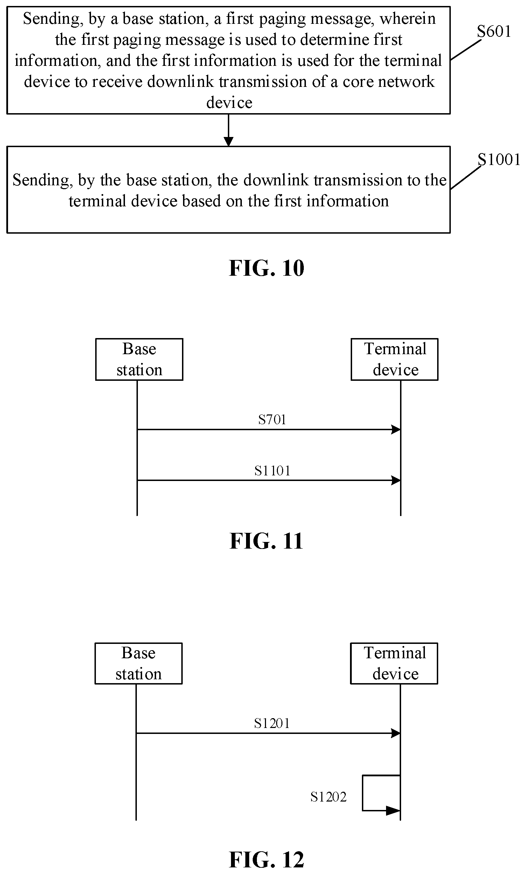

In some embodiments, based on FIG. 6, as illustrated in FIG. 10, the method further includes the following operation.

At S1001, the base station sends the downlink transmission to the terminal device based on the first information.

In some embodiments, based on FIG. 7, as illustrated in FIG. 11, the method further includes the following operation.

At S1101, the base station sends the downlink transmission to the terminal device, herein the downlink transmission is sent based on the first information.

The base station sends downlink transmission to the terminal device based on the first information, and the terminal device receives the first downlink transmission based on the first information, thereby realizing interaction of downlink transmission from the base station to the terminal device.

In some embodiments, the method further includes the following operation.

The base station receives the downlink transmission sent by the core network device.

The base station receives the downlink transmission sent by the core network device before sending the downlink transmission to the terminal device.

Optionally, the second identifier is sent to the base station together with the downlink transmission, so that the base station associates the downlink transmission with the second identifier, and determines that the downlink transmission is sent to one or more terminal devices identified by the second identifier.

In some embodiments, when a security level of the downlink transmission is higher than or equal to a set security level, the terminal device receives the downlink transmission through a random access message sent by a base station.

In some embodiments, when a security level of the downlink transmission is higher than or equal to a set security level, the base station sends the downlink transmission to the terminal device through a random access message sent by the base station.

In the embodiment of the present disclosure, in case that the security level of the downlink transmission is higher than or equal to the set security level, the terminal device and the base station adopt a fallback mechanism to execute a random access procedure. In the execution of the random access procedure, the base station sends downlink transmission to the terminal device through the sent random access message.

Optionally, the random access message for sending downlink transmission includes: message 4 in a four-step random access procedure or message B in a two-step random access procedure.

It can be understood that in case that the security level of the downlink transmission is higher than or equal to the set security level, the first paging message sent by the base station to the terminal device does not include the first information and only includes the second identifier, and the terminal device and the base station perform a random access procedure.

The wireless communication method provided in the embodiment of the present disclosure may be applied to scenarios including but not limited to the following scenarios.

### Scenario 1: Low safety level requirement

In scenario 1, the low security level requirement can be understood as that the downlink transmission does not require protection or the security level is lower than the set security level.

An embodiment of the present disclosure provides a wireless communication method, as illustrated in FIG. 12. The method includes the following operations.

At S1201, the base station sends a first paging message to the terminal device.

The first paging message includes a second identifier and first information.

At S1202, the terminal device receives the downlink transmission based on the first information.

### Scenario 2: High safety level requirement

In the scenario 2, the high security level requirement can be understood as that the security level of the downlink transmission is higher than or equal to the set security level.

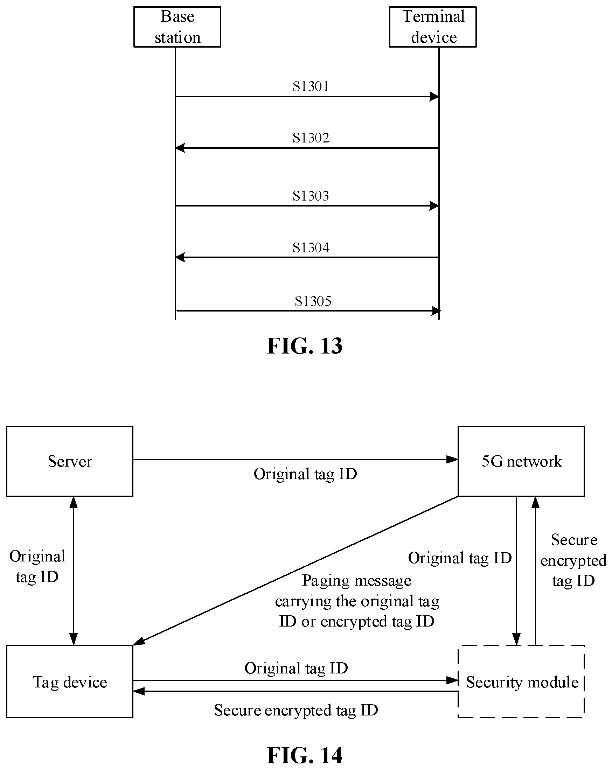

An embodiment of the present disclosure provides a wireless communication method, as illustrated in FIG. 13. The method includes the following operations.

At S1301, the base station sends a second paging message to the terminal device.

The second paging message includes first information.

At S1302, the terminal device sends message 1 to the base station.

At S1303, the base station sends message 2 to the terminal device.

The message 2 carries a random access response.

At S1304, the terminal device sends message 3 to the base station.

At S1305, the base station sends message 4 to the terminal device.

The message 4 includes a downlink transmission.

It should be noted that, in FIG. 13, the sending of downlink transmission based on a random access message sent by a base station is described with a four-step random access procedure as an example, and the four-step random access procedure here can be replaced with a two-step random access procedure.

Hereinafter, taking the terminal device as a tag device as an example, a paging method provided by an embodiment of the present disclosure will be described.
1. The base station initiates paging to the terminal device by using the ID known by the terminal, and without going through the registration process, the terminal device can receive the paging message by using the known ID as the paging UE ID in the paging record. The IDs of the terminal devices may be divided into a personal ID and a group ID. When a group ID is used, more than one terminal device having some commonality considers that the paging message is sent to itself.
2. The paging UE ID may be an ID that is set at the factory of the terminal device, or may be derived according to the ID set at the factory, for example, through a security algorithm.

The paging UE ID is stored by the tag terminal and the network server respectively. Before the tag is flowed to a certain warehouse, the 5G network covering the warehouse can obtain the ID information of the incoming tag in advance.

After having received the network paging, the tag terminal reports the UE ID to the network by performing the random access.

As illustrated in FIG. 14, the tag device (i.e., the terminal device) and the network-side server exchange an original tag ID (original tag ID), here the original tag ID can be understood as an unencrypted UE ID. The server sends the original tag ID to the 5G network. The tag device sends the original tag ID to the security module, and obtains the encrypted tag ID. The security module sends the encrypted tag ID to the tag device. The 5G network sends the original tag ID to the security module, and obtains the encrypted tag ID. The security module sends the encrypted tag ID to the 5G network. Thus, the same encrypted tag ID is stored in both the tag device and the 5G network. The 5G network sends a paging message carrying the original tag ID or the encrypted tag ID, and pages the tag device.

It should be noted that the security module in FIG. 14 is a logical concept, and actually, a first security module and a second security module are deployed in the tag device and the 5G network, respectively. The first security module and the second security module belong to the entities of the security module in FIG. 14. The original tag ID of the tag device is encrypted by the first security module deployed in the tag device to obtain the encrypted tag ID. The original tag ID of the 5G core network is encrypted by the second security module deployed in the 5G core network to obtain the encrypted tag ID.

3. When having received the paging message, the terminal device does not perform random access to the network, but receives the subsequent downlink data information according to the information received by the paging. The information in paging may include at least one of the following information:
a group RNTI for decoding downlink DCI indication information;
configuration information for searching and determining the time-frequency domain resource range of the downlink DCI, such as group-specific CORSET configuration and search space configuration;
a C-RNTI for decoding downlink DCI indication information; or
configuration information for searching and determining the time-frequency domain resource range of the downlink DCI, such as UE-specific CORSET configuration and search space configuration.

If the configuration information for searching and determining the time-frequency domain resource range of the downlink DCI is not provided in the paging message, the terminal uses the default configuration in SIB1 by default, such as Type-0 CORSET configuration and Type 0 PDCCH search space.

For the base station, in case that the terminal ID configured in advance is used in plaintext, the data is directly sent to the terminal through the paging message, which may involve data leakage (neither the paging PDCCH nor the paging message are encrypted), so the AMF and the base station need to exchange the level of data security. When the level is lower than a certain threshold, or when the AMF informs the base station that data protection is not required, the base station may send information such as G-RNTI to the terminal through a paging message according to the above operations, so that the terminal can subsequently collect the downlink data.

The wireless communication method provided by the embodiment of the present disclosure can be applied to embodiments including but not limited to the following first to third embodiments.

### First embodiment

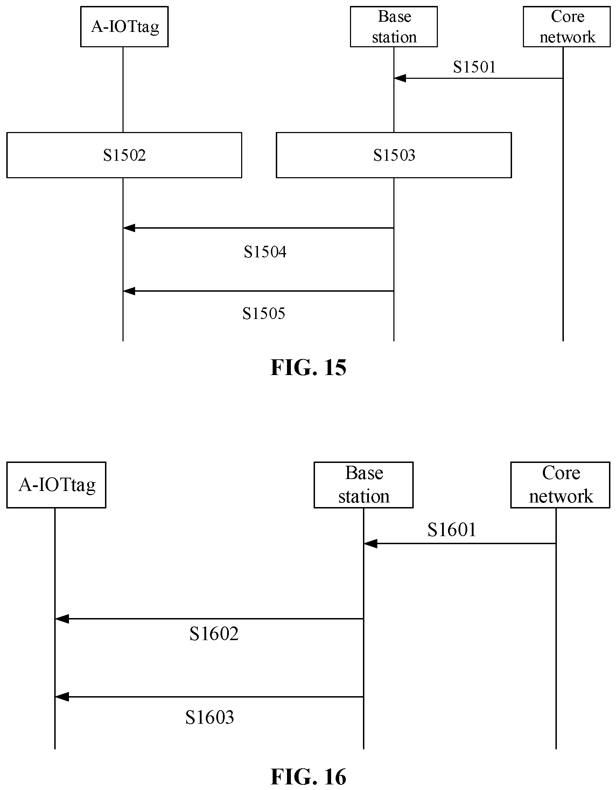

An embodiment of the present disclosure provides a wireless communication method, as illustrated in FIG. 15. The method includes the following operations.

At S1501, the core network sends the UE ID and downlink data to the base station.

At S1502, the A-IOT tag determines an encrypted UE ID based on the UE ID.

The encrypted UE ID may also be referred to as an encrypted tag ID. The A-IOT tag may obtain the encrypted tag ID according to the time and the cell ID information where it is located.

At S1503, the base station determines an encrypted UE ID based on the UE ID.

The base station may obtain the encrypted tag ID according to the time and the cell ID information where it is located.

At S1504, the base station sends a paging message including UE ID and DCI decoding related information to the A-IOT tag.

At S1505, the base station sneds DCI and PDSCH data to the A-IOT tag.

Here, the A-IOT tag receives DCI and PDSCH data based on DCI decoding related information.

### Second embodiment

An embodiment of the present disclosure provides a wireless communication method, as illustrated in FIG. 16. The method includes the following operations.

At S1601, the core network sends the UE ID, the downlink data, and the security level of the downlink data to the base station.

Here, the security level of downlink data is low.

At S1602, the base station sends a paging message including UE ID and DCI decoding related information to the A-IOT tag.

At S1603, the base station sneds DCI and PDSCH data to the A-IOT tag.

Here, the A-IOT tag receives DCI and PDSCH data based on DCI decoding related information.

### Third embodiment

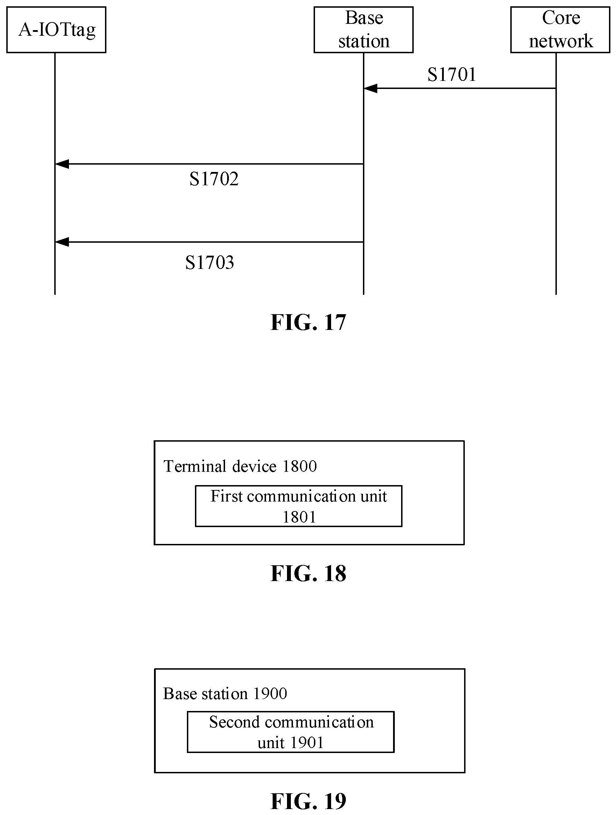

An embodiment of the present disclosure provides a wireless communication method, as illustrated in FIG. 17. The method includes the following operations.

At S1701, the core network sends the UE ID, the downlink data, and the security level of the downlink data to the base station.

Here, the security level of downlink data is high.

At S1702, the base station sends a paging message including UE ID to the A-IOT tag.

At S1703, the base station sends a message 4 (or message B) carrying DCI and PDSCH data to the A-IOT tag.

In the embodiment of the present disclosure, a method for receiving downlink data without performing an initial access by a A-IOT tag is proposed. Through the method, in the case of large-scale deployment of A-IOT devices in indoor warehouses or logistics, etc., massive initial access and registered air interface resource overhead and delay that are caused by massive devices can be saved.

The preferred embodiments of the present disclosure have been described in detail above with reference to the accompanying drawings, but the present disclosure is not limited to the specific details in the above-described embodiments. Within the scope of the technical concept of the present disclosure, various simple modifications can be made to the technical solutions of the present disclosure, and these simple modifications all fall within the scope of protection of the present disclosure. For example, various specific technical features described in the above-described detailed description can be combined in any suitable manner without contradiction. Various possible combinations will not be described separately in the present disclosure in order to avoid unnecessary repetition. For another example, various embodiments of the present disclosure may be combined arbitrarily, and as long as they do not violate the idea of the present disclosure, they should also be regarded as the disclosure of the present disclosure. For another example, on the premise that there is no conflict, the embodiments described in the present disclosure and/or the technical features in each embodiment can be arbitrarily combined with the prior art, and the technical solution obtained after the combination should also fall within the protection scope of the present disclosure.

It should also be understood that in various method embodiments of the present disclosure, the size of the sequence number in the above-described process does not mean the sequence of execution (the sequence of execution in each process should be determined by its function and internal logic), and should not constitute any limitation on the implementation of the embodiments of the present disclosure. Further, in the embodiments of the present disclosure, the terms "downlink", "uplink", and "sidelink" are used to represent a transmission direction of signal or data. The "downlink" is used to represent that the transmission direction of signal or data is a first direction from the station to the user device of the cell. The "uplink" is used to represent that the transmission direction of signal or data is a second direction from the user device of the cell to the station. The "sidelink" is used to represent that the transmission direction of signal or data is a third direction from the user device 1 to the user device 2. For example, "downlink signal" means that the transmission direction of the signal is the first direction. In addition, the term "and/or" in the embodiments of the present disclosure is only an association relationship describing associated objects, and indicates that there may be three kinds of relationships. For example, A and/or B may indicate that A exists alone, A and B exist simultaneously, and B exists alone. In addition, the character "/" herein generally indicates that the associated objects are in an "or" relationship.

FIG. 18 is a schematic diagram of the structural composition of the terminal device according to the embodiment of the present disclosure. As illustrated in FIG. 18, the terminal device 1800 includes a first communication unit 1801.

The first communication unit 1801 is used to receive a first paging message, herein the first paging message is used to determine first information, and the first information is used for the terminal device to receive downlink transmission of a core network device.

In some embodiments, the first information includes one or more of the following:
a first identifier for decoding the downlink transmission; or
first configuration information for determining a time-frequency resource range of the downlink transmission.

In some embodiments, the first identifier includes:
a group radio network temporary identifier (G-RNTI) or a cell radio network temporary identifier (C-RNTI).

In some embodiments, if the first information does not include the first configuration information, the time-frequency resource range of the downlink transmission is based on first configuration information contained in system information block SIB1.

In some embodiments, the first configuration information includes:
group-specific second information or terminal device-specific second information, the second information including: control resource set configuration information and/or search space configuration information.

In some embodiments, the first paging message includes a second identifier, and the second identifier is an identifier of the terminal device or an encrypted identifier of the terminal device.

In some embodiments, if the second identifier is the encrypted identifier of the terminal device, the second identifier is obtained by performing calculation on the identifier of the terminal device through a security algorithm.

In some embodiments, the second identifier is prestored in the terminal device and the core network device.

In some embodiments, a condition that the first paging message includes the first information is one of the following:
the downlink transmission does not need to be protected;
a security level of the downlink transmission is lower than a set security level.

In some embodiments, the first communication unit 1801 is further used to receive the downlink transmission based on the first information.

In some embodiments, the first communication unit 1801 is further used to receive the downlink transmission through a random access message sent by a base station when a security level of the downlink transmission is higher than or equal to a set security level.

The first communication unit in the terminal device may be implemented by a transceiver in the terminal device.

It can be understood that the terminal device may further include a first processing unit used to process the downlink transmission. The first processing unit may be implemented by a processor in the terminal device.

FIG. 19 is a schematic diagram of the structural composition of the base station according to the embodiment of the present disclosure. As illustrated in FIG. 19, the base station 1900 includes a second communication unit 1901.

The second communication unit 1901 is used to send a first paging message, herein the first paging message is used to determine first information, and the first information is used for the terminal device to receive downlink transmission of a core network device.

In some embodiments, the first information includes one or more of the following:
a first identifier for decoding the downlink transmission; or
first configuration information for determining a time-frequency resource range of the downlink transmission.

In some embodiments, the first identifier includes:
a group radio network temporary identifier (G-RNTI) or a cell radio network temporary identifier (C-RNTI).

In some embodiments, if the first information does not include the first configuration information, the time-frequency resource range of the downlink transmission is based on first configuration information contained in system information block SIB1.

In some embodiments, the first configuration information includes:
group-specific second information or terminal device-specific second information, the second information including: control resource set configuration information and/or search space configuration information.

In some embodiments, the first paging message includes a second identifier, and the second identifier is an identifier of the terminal device or an encrypted identifier of the terminal device.

In some embodiments, if the second identifier is the encrypted identifier of the terminal device, the second identifier is obtained by performing calculation on the identifier of the terminal device through a security algorithm.

In some embodiments, the second identifier is prestored in the terminal device and the core network device.

In some embodiments, the second communication unit 1901 is further used to receive the second identifier sent by the core network device.

In some embodiments, a condition that the first paging message includes the first information is one of the following:
the downlink transmission does not need to be protected;
a security level of the downlink transmission is lower than a set security level.

In some embodiments, the second communication unit 1901 is further used to receive indication information sent by the core network device, herein the indication information is used to indicate a security level of the downlink transmission.

In some embodiments, the second communication unit 1901 is further used to send the downlink transmission to the terminal device based on the first information.

In some embodiments, the second communication unit 1901 is further used to receive the downlink transmission sent by the core network device.

In some embodiments the second communication unit 1901 is further used to send the downlink transmission to the terminal device through a random access message sent by the base station when a security level of the downlink transmission is higher than or equal to a set security level.

The second communication unit in the base station may be implemented by a transceiver in the network device.

It can be understood that the base station may further include a second processing unit used to determine a first paging message carrying the first information. The second processing unit in the base station may be implemented by a processor in the base station.

Those skilled in the art should understand that the related description of the above-described terminal device or base station according to the embodiments of the present disclosure can be understood with reference to the related description of the wireless communication method according to the embodiments of the present disclosure.

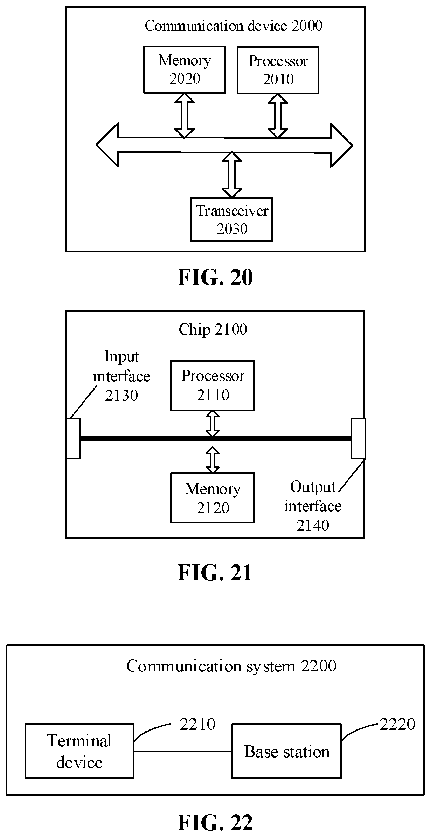

FIG. 20 is a schematic diagram of a structure of a communication device 2000 according to an embodiment of the present disclosure. The communication device may be a terminal device or a base station. As illustrated in FIG. 20, the communication device 2000 includes a processor 2010. The processor 2010 may call and run a computer program from a memory to implement the method in the embodiment of the present disclosure.

Optionally, as illustrated in FIG. 20, the communication device 2000 may further include a memory 2020. The processor 2010 may call and run a computer program from the memory 2020 to implement the method in the embodiment of the present disclosure.

The memory 2020 may be a separate device independent of the processor 2010, or may be integrated in the processor 2010.

Optionally, as illustrated in FIG. 20, the communication device 2000 may further include a transceiver 2030. The processor 2010 may control the transceiver 2030 to communicate with other devices, specifically, may send information or data to other devices, or receive information or data sent by other devices.

Here, the transceiver 2030 may include a transmitter and a receiver. The transceiver 2030 may further include antennas, and the number of antennas may be one or more.

Optionally, the communication device 2000 may be the base station according to the embodiment of the present disclosure. The communication device 2000 may realize the corresponding flow implemented by the base station in each method according to the embodiment of the present disclosure, and the description thereof will not be repeated here for the sake of brevity.

Optionally, the communication device 2000 may be applied to the mobile terminal/terminal device according to the embodiment of the present disclosure. The communication device 2000 may realize the corresponding flow implemented by the the mobile terminal/terminal device in each method according to the embodiment of the present disclosure, and the description thereof will not be repeated here for the sake of brevity.

FIG. 21 is a schematic diagram of a structure of a chip according to an embodiment of the present disclosure. As illustrated in FIG. 21, the chip 2100 includes a processor 2110. The processor 2110 may call and run a computer program from a memory to implement the method in the embodiment of the present disclosure.

Optionally, as illustrated in FIG. 21, the chip 2100 may further include a memory 2120. The processor 2110 may call and run a computer program from the memory 2120 to implement the method in the embodiment of the present disclosure.

The memory 2120 may be a separate device independent of the processor 2110, or may be integrated in the processor 2110.

Optionally, the chip 2100 may further include an input interface 2130. The processor 2110 may control the input interface 2130 to communicate with other devices or chips, specifically, may acquire information or data sent by other devices or chips.

Optionally, the chip 2100 may also include an output interface 2140. The processor 2110 may control the output interface 2140 to communicate with other devices or chips, specifically, may output information or data to other devices or chips.

Optionally, the chip may be applied to the base station in the embodiment of the present disclosure, and the chip may realize the corresponding process implemented by the base station in each method according to the embodiment of the present disclosure, which is not described here for the sake of brevity.

Optionally, the chip may be applied to the mobile terminal/terminal device according to the embodiment of the present disclosure. The chip may realize the corresponding flow implemented by the the mobile terminal/terminal device in each method according to the embodiment of the present disclosure, and the description thereof will not be repeated here for the sake of brevity.

It should be understood that the chip mentioned in the embodiments of the present disclosure may also be referred to as a system level chip, a system chip, a chip system, or a system-on-chip (SoC).

FIG. 22 illustrates a schematic block diagram of a communication system 2200 according to an embodiment of the present disclosure. As illustrated in FIG. 22, the communication system 2200 includes a terminal device 2210 and a base station 2220.

The terminal device 2210 may be used to implement the corresponding functions implemented by the terminal device in the above-described method, and the base station 2220 may be used to implement the corresponding functions implemented by the base station in the above-described method.

It should be understood that the processor in the embodiment of the present disclosure may be an integrated circuit chip having signal processing capabilities. In the implementation process, the operations of the above-described method embodiments may be completed by integrated logic circuits of hardware in the processor or instructions in the form of software. The processor described above may be a general-purpose processor, a Digital Signal Processor (DSP), an Application Specific Integrated Circuit (ASIC), an off-the-shelf Field Programmable Gate Array (FPGA) or other programmable logic device, a discrete gate or transistor logic device, or a discrete hardware component. The methods, operations, and logical block diagrams disclosed in the embodiments of the present disclosure may be implemented or executed. The general-purpose processor may be a microprocessor, or the processor may be any conventional processor or the like. The operations of the method disclosed in combination with the embodiments of the present disclosure may be directly executed by the hardware decoding processor, or may be executed by combining hardware and software modules in the decoding processor. The software module may be located in a storage medium mature in the art, such as a random access memory, a flash memory, a read-only memory, a programmable read-only memory, or an electrically erasable and writable programmable memory, a register, etc. The storage medium is located in the memory, and the processor reads the information in the memory, and combines its hardware to complete the operations of the above method.

It can be understood that the memory in the embodiments of the present disclosure may be a volatile memory or a non-volatile memory, or may include both a volatile memory and a non-volatile memory. The non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which serves as an external cache. By way of illustration, but not by way of limitation, many forms of RAM are available, such as Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), and Direct Rambus RAM (DR RAM). It should be noted that the memory described herein is intended to include, but is not limited to, these and any other suitable type of memory.

It is also understood that the memory described above is exemplary but not limiting, for example, the memory in the embodiments of the present disclosure may also be a static random access memory (SRAM), a dynamic random access memory (DRAM), a synchronous dynamic random access memory (SDRAM), a double data rate SDRAM (DDR SDRAM), an Enhanced SDRAM (ESDRAM), a synch link DRAM (SLDRAM), and a Direct Rambus RAM (DR RAM). That is, the memory in the embodiments of the present disclosure is intended to include, but is not limited to, these and any other suitable type of memory.

An embodiment of the present disclosure also provides a computer-readable storage medium for storing a computer program.

Optionally, the computer readable storage medium can be applied to the base station in the embodiment of the present disclosure. The computer program causes the computer to execute the corresponding process implemented by the base station in each method of the embodiment of the present disclosure, which is not repeated here for the sake of brevity.

Optionally, the computer readable storage medium can be applied to the mobile terminal/terminal device in the embodiment of the present disclosure. The computer program causes the computer to execute the corresponding process implemented by the mobile terminal/terminal device in each method of the embodiment of the present disclosure, which is not repeated here for the sake of brevity.

An embodiment of the present disclosure also provides a computer program product including computer program instructions.

Optionally, the computer program product can be applied to the base station in the embodiment of the present disclosure. The computer program instructions cause the computer to execute the corresponding process implemented by the base station in each method of the embodiment of the present disclosure, which is not repeated here for the sake of brevity.

Optionally, the computer program product can be applied to the mobile terminal/terminal device in the embodiment of the present disclosure. The computer program instructions cause the computer to execute the corresponding process implemented by the mobile terminal/terminal device in each method of the embodiment of the present disclosure, which is not repeated here for the sake of brevity.

An embodiment of the present disclosure also provides a computer program.

Optionally, the computer program can be applied to the base station in the embodiment of the present disclosure. When the computer program is running on the computer, the computer executes the corresponding process implemented by the base station in each method of the embodiment of the present disclosure, which is not repeated here for the sake of brevity.

Optionally, the computer program can be applied to the mobile terminal/terminal device in the embodiment of the present disclosure. When the computer program is running on the computer, the computer executes the corresponding process implemented by the mobile terminal/terminal device in each method of the embodiment of the present disclosure, which is not repeated here for the sake of brevity.

Those of ordinary skill in the art will appreciate that the elements and algorithmic steps of the examples described in connection with the embodiments of the present disclosure can be implemented in electronic hardware, or a combination of computer software and electronic hardware. Whether these functions are performed in hardware or software depends on the specific application and design constraints of the technical solution. For each specific application, those skilled in the art may use different methods for implementing the described functions, but such implementations should not be considered beyond the scope of the present disclosure.

Those skilled in the art can clearly understand that for convenience and conciseness of the description, the specific working processes of the system, devices and units described above can refer to the corresponding processes in the aforementioned method embodiments, and will not be repeatedly described here.

It should be understood that the disclosed system, apparatus and method in several embodiments provided in the present disclosure, may be implemented in other manners. For example, the device embodiments described above are merely schematic, for example, the division of units is only a logical function division, and there may be other division manners in actual implementation. For example, multiple units or components may be combined, or may be integrated into another system; some features may be ignored or not executed. In addition, the coupling or direct coupling or communication connection between each other illustrated or discussed may be an indirect coupling or communication connection through some interfaces, devices or units, which may be electrical, mechanical or otherwise.

The units described as separate components may or may not be physically separate, and the units displayed as units may or may not be physical units, that is, they may be located in one place or may be distributed over multiple network units. Some or all of the units may be selected according to actual needs to achieve the purpose of the solution of the present embodiment.

Furthermore, various functional units in the embodiments of the present disclosure may be integrated into one processing unit or physically present alone, or two or more units may be integrated in one unit.

If a function is implemented in the form of a software functional unit and is sold or used as an independent product, it may be stored in a computer-readable storage medium. Based on such an understanding, the technical solutions of the present disclosure, or in essence the part contributing to the prior art or the part of the technical solutions can be embodied in the form of a software product, and the computer software product is stored in a storage medium, which includes several instructions so that a computer device (may be a personal computer, a server, a base station or the like) implements all or part of the method according to respective embodiments of the present disclosure. The aforementioned storage medium includes various media capable of storing a program code such as a USB disk, a mobile hard drive disk, a Read-Only Memory (ROM), a Random Access Memory (RAM), a magnetic disk or an optical disk.

The above are merely detailed embodiments of the present disclosure, but the protection scope of the present disclosure is not limited thereto, and any person skilled in the art can easily think of changes or substitutions within the technical scope disclosed in the present disclosure, which should be covered within the protection scope of the present disclosure. Therefore, the protection scope of the present disclosure should be based on the protection scope of the claims.

## Claims

1. A wireless communication method, comprising:
receiving, by a terminal device, a first paging message, wherein the first paging message is used to determine first information, and the first information is used for the terminal device to receive downlink transmission of a core network device.

2. The method of claim 1, wherein the first information comprises one or more of:
a first identifier for decoding the downlink transmission; or
first configuration information for determining a time-frequency resource range of the downlink transmission.

3. The method of claim 2, wherein the first identifier comprises:
a group radio network temporary identifier (G-RNTI) or a cell radio network temporary identifier (C-RNTI).

4. The method of claim 2 or 3, wherein when the first information does not comprise the first configuration information, the time-frequency resource range of the downlink transmission is based on first configuration information contained in system information block SIB1.

5. The method of any one of claims 2-4, wherein the first configuration information comprises:
group-specific second information or terminal device-specific second information, the second information comprising: control resource set configuration information and/or search space configuration information.

6. The method of any one of claims 1-5, wherein the first paging message comprises a second identifier, and the second identifier is an identifier of the terminal device or an encrypted identifier of the terminal device.

7. The method of claim 6, wherein when the second identifier is the encrypted identifier of the terminal device, the second identifier is obtained by performing calculation on the identifier of the terminal device through a security algorithm.

8. The method of claim 6 or 7, wherein the second identifier is prestored in the terminal device and the core network device.

9. The method of any one of claims 1-8, wherein a condition that the first paging message comprises the first information is one of the following:
the downlink transmission does not need to be protected;
a security level of the downlink transmission is lower than a set security level.

10. The method of any one of claims 1-9, further comprising:
receiving, by the terminal device, the downlink transmission based on the first information.

11. The method of any one of claims 1-9, further comprising:
when a security level of the downlink transmission is higher than or equal to a set security level, receiving, by the terminal device, the downlink transmission through a random access message sent by a base station.

12. A wireless communication method, comprising:
sending, by a base station, a first paging message, wherein the first paging message is used to determine first information, and the first information is used for the terminal device to receive downlink transmission of a core network device.

13. The method of claim 12, wherein the first information comprises one or more of:
a first identifier for decoding the downlink transmission; or
first configuration information for determining a time-frequency resource range of the downlink transmission.

14. The method of claim 13, wherein the first identifier comprises:
a group radio network temporary identifier (G-RNTI) or a cell radio network temporary identifier (C-RNTI).

15. The method of claim 13 or 14, wherein when the first information does not comprise the first configuration information, the time-frequency resource range of the downlink transmission is based on first configuration information contained in system information block SIB1.

16. The method of any one of claims 13-15, wherein the first configuration information comprises:
group-specific second information or terminal device-specific second information, the second information comprising: control resource set configuration information and/or search space configuration information.

17. The method of any one of claims 12-16, wherein the first paging message comprises a second identifier, and the second identifier is an identifier of the terminal device or an encrypted identifier of the terminal device.

18. The method of claim 17, wherein when the second identifier is the encrypted identifier of the terminal device, the second identifier is obtained by performing calculation on the identifier of the terminal device through a security algorithm.

19. The method of claim 17 or 18, wherein the second identifier is prestored in the terminal device and the core network device.

20. The method of claim 19, further comprising:
receiving, by the base station, the second identifier sent by the core network device.

21. The method of any one of claims 12-20, wherein a condition that the first paging message comprises the first information is one of the following:
the downlink transmission does not need to be protected;
a security level of the downlink transmission is lower than a set security level.

22. The method according to claim 21, further comprising:
receiving, by the base station, indication information sent by the core network device, wherein the indication information is used to indicate a security level of the downlink transmission.

23. The method of any one of claims 12-22, further comprising:
sending, by the base station, the downlink transmission to the terminal device based on the first information.

24. The method of claim 23, further comprising:
receiving, by the base station, the downlink transmission sent by the core network device.

25. The method of any one of claims 12-24, further comprising:
when a security level of the downlink transmission is higher than or equal to a set security level, sending, by the base station, the downlink transmission to the terminal device through a random access message sent by the base station.

26. A terminal device, comprising:
a first communication unit for receiving a first paging message, wherein the first paging message is used to determine first information, and the first information is used for the terminal device to receive downlink transmission of a core network device.

27. A base station, comprising:
a second communication unit for sending a first paging message, wherein the first paging message is used to determine first information, and the first information is used for the terminal device to receive downlink transmission of a core network device.

28. A terminal device, comprising: a memory for storing a computer program, and a processor for calling and running the computer program stored in the memory to execute the method of any one of claims 1-11.

29. A base station, comprising: a memory for storing a computer program, and a processor for calling and running the computer program stored in the memory to execute the method of any one of claims 12-25.

30. A chip, comprising: a processor for calling and running a computer program in a memory, to cause a device on which the chip is mounted to execute the method of any one of claims 1-11 or the method of any one of claims 12-25.

31. A computer readable storage medium, having stored thereon a computer program, wherein running of the computer program causes a computer to execute the method of any one of claims 1-12 or the method of any one of claims 13-25.

32. A computer program product, comprising: computer program instructions, wherein running of the computer program instructions causes a computer to execute the method of any one of claims 1-12 or the method of any one of claims 13-25.

33. A computer program, wherein running of the computer program causes a computer to execute the method of any one of claims 1-12 or the method of any one of claims 13-25.
